# EUROPÄISCHE PATENTSCHRIFT

(11) **EP 3 004 780 B1**
(45) Veröffentlichungstag und Bekanntmachung des Hinweises auf die Patenterteilung: **04.11.2020**
(21) Anmeldenummer: 14725474.2
(22) Anmeldetag: 22.05.2014
(51) Int. Cl.: F28F 21/06, F02B 29/04, F02M 26/00, F28D 21/00

(54) **ABGASWÄRMEÜBERTRAGER**
EXHAUST-GAS HEAT EXCHANGER
ÉCHANGEUR DE CHALEUR DE GAZ D'ÉCHAPPEMENT

(30) Priorität: 23.05.2013 DE 102013209617
(43) Veröffentlichungstag der Anmeldung: 13.04.2016
(73) Patentinhaber: Mahle International GmbH, 70376 Stuttgart (DE)
(72) Erfinder: GRILL, Oliver, 71159 Mötzingen (DE); WEISER, Helmut, 72076 Tübingen (DE)
(74) Vertreter: Grauel, Andreas
(86) Internationale Anmeldenummer: PCT/EP2014/060510
(87) Internationale Veröffentlichungsnummer: WO 2014/187888

(56) Entgegenhaltungen:
- EP-A2- 1 895 258
- EP-A2- 2 031 338
- DE-A-102004 016 344
- DE-A1-102009 009 807
- DE-A1-102009 050 884
- FR-A1- 2 856 747
- US-A1- 2011 120 671

## Beschreibung

### Technisches Gebiet

Die Erfindung betrifft einen Abgaswärmeübertrager nach dem Oberbegriff des ersten Anspruchs. EP 2 031 338A2 offenbart einen solchen Abgaswärmeübertrager.

### Stand der Technik

Um die Emissionswerte in modernen Verbrennungsmotoren weiter reduzieren zu können, wird das Konzept der Abgasrückführung eingesetzt. Hierzu wird das aus dem Verbrennungsmotor nach der Verbrennung ausströmende Abgas zuerst zur Abkühlung durch einen Wärmeübertrager geleitet und anschließend erneut dem Verbrennungsmotor zugeführt. Dadurch werden die Temperatur im Brennraum und die Entstehung von Emissionen reduziert.

Im Stand der Technik sind hierzu vielfältige Lösungen bekannt, die unter anderem verschiedene Abgaswärmeübertrager aus Edelstahl und/oder Aluminium vorsehen. Zu diesen gehören beispielsweise Rohrbündelwärmeübertrager oder Wärmeübertrager, welche in Stapelscheibenbauweise erzeugt sind. Im Wärmeübertrager wird dabei ein Wärmeübertrag von dem heißen Abgas auf ein Kühlmittel erzeugt.

Nachteilig an den Lösungen im Stand der Technik ist insbesondere, dass regelmäßig Edelstahl und Aluminium als Materialien für die Wärmeübertrager verwendet werden. Edelstahl ist dabei kostenintensiv, schwer und weist hinsichtlich der Formgebungsmöglichkeiten Einschränkungen auf, die unter anderem aus dem jeweils gewählten Fertigungsverfahren resultieren. Aluminium ist aufgrund der Materialeigenschaften in bestimmten korrosiven Umgebungen nicht verwendbar.

### Darstellung der Erfindung, Aufgabe, Lösung, Vorteile

Es ist die Aufgabe der vorliegenden Erfindung einen Abgaswärmeübertrager bereitzustellen, der gegenüber dem Stand der Technik optimiert ist und sich insbesondere durch einen kostengünstigen Aufbau, ein niedriges Gewicht und eine hohe Gestaltungsfreiheit hinsichtlich der Formgebung auszeichnet.

Die Aufgabe des Abgaswärmeübertragers wird durch einen Abgaswärmeübertrager mit den Merkmalen des Anspruchs 1 gelöst.

Ein Ausführungsbeispiel der Erfindung betrifft einen Abgaswärmeübertrager mit einem Gehäuse und mit einem ersten Strömungskanal, wobei der erste Strömungskanal derart in dem Gehäuse aufgenommen ist, dass zwischen dem ersten Strömungskanal und dem Gehäuse ein zweiter Strömungskanal gebildet ist, wobei der erste Strömungskanal von einem ersten Fluid durchströmbar ist und der zweite Strömungskanal von einem zweiten Fluid durchströmbar ist, wobei der erste Strömungskanal von dem zweiten Fluid umströmbar ist, wobei das Gehäuse endseitig einen ersten Diffusor und einen zweiten Diffusor aufweist, wobei zumindest einer der Diffusoren aus einem Kunststoff gebildet ist.

Der Abgaswärmeübertrager ist dabei in Form eines Rohrbündelwärmeübertragers aufgebaut. Eine Einzahl oder Mehrzahl von fluidführenden Rohren ist derart innerhalb des Gehäuses angeordnet, dass zwischen den Rohren und dem Gehäuse ein zweiter Strömungskanal gebildet wird, der von einem zweiten Fluid durchströmt werden kann. Regelmäßig handelt es sich bei dem Fluid, welches durch die Rohre strömt, um ein Abgas aus einem Verbrennungsmotor und bei dem zweiten Fluid, welches den zweiten Strömungskanal durchströmt, um ein Kühlmittel.

Die Rohre sind dabei vorteilhafterweise endseitig in Rohrböden aufgenommen, welche das Gehäuse und damit auch den zweiten Strömungskanal endseitig verschließen. Die Fluidzuführung in die Rohre bzw. von den Rohren weg erfolgt dabei über Diffusoren, welche derart mit dem Gehäuse verbunden sind, dass eine fluiddichte Verbindung zwischen dem Diffusor und den Rohren entsteht.

Das Gehäuse weist weiterhin vorteilhafterweise einen ersten Fluidanschluss für die Zuführung des zweiten Fluids in den zweiten Strömungskanal auf und einen zweiten Fluidanschluss für das Abführen des zweiten Fluids aus dem zweiten Strömungskanal.

Ein aus Kunststoff gefertigter Diffusor ist insbesondere vorteilhaft, da die Herstellung wesentlich einfacher und kostengünstiger ist als die Herstellung eines Diffusors aus einem metallischen Werkstoff. Außerdem ist das Gewicht eines Kunststoffdiffusors niedriger.

Darüber hinaus kann es vorteilhaft sein, wenn der aus Kunststoff gebildete Diffusor zumindest teilweise aus einem oder mehreren der Materialien Polyamid (PA6) und/oder Polyamid (PA66) und/oder Polyphthalamid (PPA) und/oder Polyphenylensulfid (PPS) gebildet ist.

Die aufgeführten Kunststoffe zeichnen sich besonders durch eine gute Verarbeitbarkeit aus und sind zudem einfach zu beziehen. Weiterhin sind sie insbesondere gegenüber korrosiven Medien, wie sie beispielsweise im Abgas vorkommen können, weitgehend resistent. Darüber hinaus weisen die genannten Kunststoffe eine ausreichend hohe Temperaturfestigkeit auf, um in einem Abgaswärmeübertrager eingesetzt werden zu können. Die Stoßfestigkeit der aufgeführten Kunststoffe ist außerdem vorteilhaft um mechanische Einwirkungen, etwa durch im Abgas mitgeführte Schmutzpartikel, schadfrei zu überstehen.

Auch kann es zweckmäßig sein, wenn der aus Kunststoff gefertigte Diffusor eine erste Öffnung und eine zweite Öffnung aufweist, wobei die erste Öffnung des Diffusors dem Gehäuse zugewandt ist und die zweite Öffnung des Diffusors von dem Gehäuse abgewandt ist.

Insbesondere an die zweite Öffnung kann eine Rohrleitung angeschlossen werden, über welche ein Fluid in den Diffusor einströmen oder aus diesem herausströmen kann. Die Gestaltung des Diffusors erleichtert die Anbindung einer fluidzuführenden oder einer fluidabführenden Rohrleitung an den Abgaswärmeübertrager. Durch einen angepassten Querschnittsverlauf des Diffusors kann so eine Rohrleitung kleineren Durchmessers an das Gehäuse angeschlossen werden, welches im Regelfall einen größeren Durchmesser aufweist als die Rohrleitung. Über eine entsprechende Gestaltung des Diffusors können auch Rohrleitungen und Gehäuse unterschiedlicher Querschnittsformen aneinander angebunden werden.

Weiterhin kann es besonders vorteilhaft sein, wenn um die erste Öffnung ein umlaufender ebener Flanschbereich ausgebildet ist, über welchen der Diffusor an das Gehäuse anbindbar ist.

Der ebene Flanschbereich verläuft dabei vorteilhafterweise in einer Ebene, welche senkrecht zur Haupterstreckungsrichtung des ersten Strömungskanals im Gehäuse verläuft. Der Diffusor ist dabei besonders vorteilhaft an das Gehäuse anbindbar, wenn das Gehäuse ebenfalls einen vergleichbar ausgerichteten umlaufenden Flansch aufweist.

In einer vorteilhaften Gestaltung kann zwischen dem Diffusor und dem Gehäuse ein Dichtungselement vorgesehen sein, welches beispielsweise aus einem Elastomer gebildet ist. Das Dichtungselement kann dabei entweder zwischen Diffusor und Gehäuse eingelegt sein oder wahlweise am Diffusor und/oder am Gehäuse angespritzt sein. Alternativ dazu kann auch eine Metalldichtung vorgesehen werden, welche zwischen Diffusor und Gehäuse eingelegt wird.

Ein bevorzugtes Ausführungsbeispiel ist dadurch gekennzeichnet, dass der aus Kunststoff gefertigte Diffusor eine Umlenkung der Hauptströmungsrichtung des ihn durchströmenden Fluids zwischen der ersten Öffnung und der zweiten Öffnung um einen vorgebbaren Winkel aufweist, wobei die Umlenkung vorzugsweise um einen Winkel von 90° erfolgt.

Über eine Umlenkung der Strömungsrichtung des den Diffusor durchströmenden Fluids kann eine besonders platzsparende Bauform des Abgaswärmeübertragers erzielt werden. Eine Umlenkung kann dabei grundsätzlich in jedem beliebigen Winkel erfolgen. Es ist bei der Auslegung der Umlenkung insbesondere auf den entstehenden Druckverlust infolge der Umlenkung zu achten.

In einer alternativen Ausgestaltung der Erfindung kann es vorgesehen sein, dass der aus Kunststoff gefertigte Diffusor als Modulbaugruppe ausgeführt ist, wobei die Modulbaugruppe zumindest eine Stützhülse und/oder ein Verstärkungsmittel und/oder eine Druckplatte und/oder ein Dichtungsmittel aufweist.

Eine Modulbaugruppe ist insbesondere vorteilhaft, da der Aufwand während des Montageprozesses durch die Verwendung einer Modulbaugruppe verringert werden kann. Die Vormontage der Modulbaugruppe kann dabei zeitlich entkoppelt vom restlichen Montageprozess erfolgen. Außerdem bietet eine derart gestaltete Modulbau-gruppe die Möglichkeit, einen aus einem metallischen Werkstoff gefertigten Diffusor auf einfache Weise gegen einen aus Kunststoff gefertigten Diffusor auszutauschen.

Mit einer Stützhülse ist ein metallischer Ring gemeint, welcher in die zweite Öffnung des Diffusors eingesetzt werden kann, um eine zusätzliche Stützwirkung gegen ein Klemmelement, wie beispielsweise eine Schlauchschelle, zu erzeugen und damit den aus Kunststoff gefertigten Diffusor zu unterstützen.

Mit einem Verstärkungsmittel ist insbesondere eine Hülse gemeint, welche in Bohrungen im Flanschbereich des Diffusors eingesetzt werden kann, um die Klemmkräfte, welche von Schrauben im Zuge der Verbindung mit dem Gehäuse erzeugt werden, abzumildern. Dadurch soll eine Beschädigung des aus Kunststoff gefertigten Diffusors vermieden werden.

Mit einer Druckplatte ist hier insbesondere eine Kunststoffplatte oder eine Metallplatte gemeint, welche auf den Flanschbereich des Diffusors aufgelegt wird und dabei hilft, die punktuellen Belastungen, welche durch die Schraubverbindungen entstehen, gleichmäßig auf den gesamten Flanschbereich zu verteilen. Hierzu ist die Druckplatte derart gestaltet, dass sie mit dem Flanschbereich im Wesentlichen übereinstimmende Abmessungen aufweist und mit den Bohrungen im Flanschbereich korrespondierende Öffnungen aufweist.

Eine Elastomerdichtung kann hierbei beispielsweise an den Diffusor angespritzt, mit diesem verklebt oder über anderweitige Haltemittel mit diesem verbunden sein.

Auch ist es zu bevorzugen, wenn der aus Kunststoff gefertigte Diffusor in einem Spritzgussverfahren herstellbar ist.

Das Spritzgussverfahren ist insbesondere vorteilhaft, da eine sehr große Gestaltungsfreiheit für die Gestaltung des Diffusors gegeben ist.

In einer besonders günstigen Ausgestaltung der Erfindung ist es außerdem vorgesehen, dass der aus Kunststoff gefertigte Diffusor über eine Mehrzahl von Schraubverbindungen an das Gehäuse anbindbar ist.

Schraubverbindungen sind besonders vorteilhaft, da durch sie eine sehr gleichmäßige und besonders belastungsresistente Verbindung erzeugbar ist. Die Verbindungen sind außerdem schadfrei wieder lösbar und können an verschiedenste Gestaltungen des Diffusors und insbesondere des Flanschbereichs angepasst werden.

Erfindungsgemäss, weist der aus Kunststoff gefertigte Diffusor an zumindest einer seiner Außenflächen eine Mehrzahl von Rippenelementen auf, welche die Festigkeit des Diffusors erhöhen.

Rippenelemente an der Außenseite des Diffusors sind besonders vorteilhaft, um die infolge des Abgasdrucks im Inneren des Diffusors entstehende Belastung vorteilhaft aufzunehmen. Durch eine optimierte Gestaltung der Rippenelemente, kann eine ungewollte Verformung des Diffusors im Betrieb vermieden werden, was der Dauerhaltbarkeit des Diffusors zuträglich ist.

Erfindungsgemäss ist der erste Diffusor aus einem metallischen Werkstoff gebildet und der zweite Diffusor aus einem Kunststoff, wobei durch den ersten Diffusor das erste Fluid in den ersten Strömungskanal zuführbar und durch den zweiten Diffusor aus dem ersten Strömungskanal abführbar ist.

Insbesondere der erste Diffusor, welcher der Zuführung des ersten Fluids dient, ist vorteilhafterweise aus einem metallischen Werkstoff gebildet, da es sich bei dem ersten Fluid regelmäßig um ein Abgas aus einem Verbrennungsmotor handelt. Die Temperatur des noch nicht abgekühlten Abgases am Eintritt des Abgaswärmeübertragers kann dabei für einen aus Kunststoff gefertigten Diffusor zu hoch sein. Erst nach der Abkühlung des Abgases im Abgaswärmeübertrager weist das Abgas zuverlässig eine Temperatur auf, welche unter der maximalen Grenztemperatur des aus Kunststoff gefertigten zweiten Diffusors liegt. Mit der Grenztemperatur ist hier eine Temperatur gemeint, welche für die strukturelle Integrität des aus Kunststoff gefertigten Diffusors unkritisch ist.

Vorteilhafte Weiterbildungen der vorliegenden Erfindung sind in den Unteransprüchen und der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
Fig.1 eine perspektivische Außenansicht eines aus Kunststoff gefertigten Diffusors, welcher mittels mehrerer Schraubverbindungen an einem Gehäuse eines Abgaswärmeübertragers angebunden ist, und
Fig. 2 eine Schnittansicht durch einen erfindungsgemäßen Diffusor aus Kunststoff, der an ein Gehäuse eines Abgaswärmeübertragers angebunden ist.

### Bevorzugte Ausführung der Erfindung

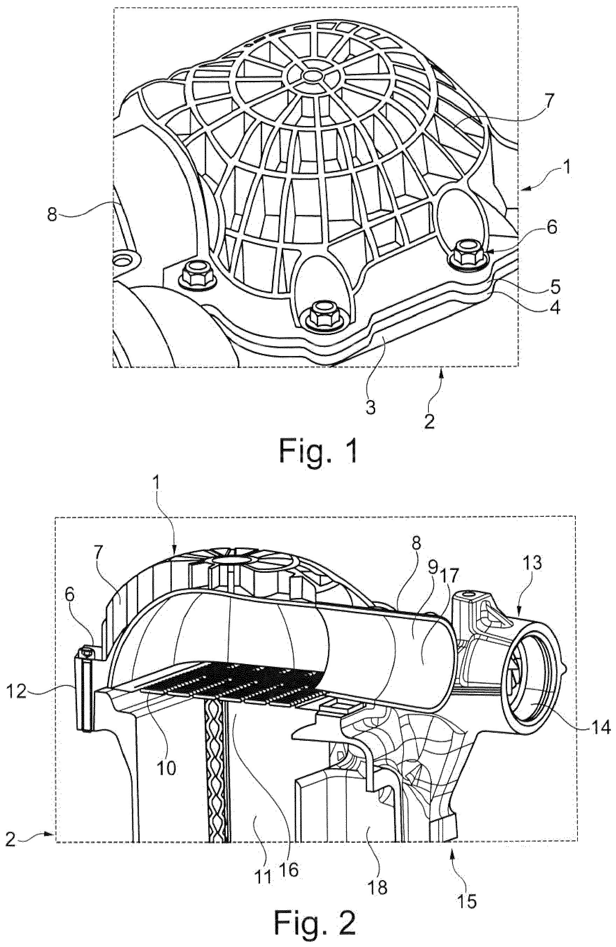

Die Fig. 1 zeigt eine perspektivische Ansicht eines aus Kunststoff gefertigten Diffusors 1. Der Diffusor 1 ist auf ein Gehäuse 2 aufgesetzt. Hierzu weist das Gehäuse 2 einen umlaufenden ebenen Flanschbereich 3 auf, an welchen der Diffusor 1 über Schraubverbindungen 6 angebunden ist. Zwischen dem Gehäuse 2 und dem Diffusor 1 ist ein Dichtungsmittel 4 sowie eine Druckplatte 5 angeordnet.

Das Dichtungsmittel 4 kann dabei beispielsweise als Elastomerdichtung ausgebildet sein oder auch als Metalldichtung. Es kann zwischen dem Diffusor 1 und das Gehäuse 2 eingelegt werden oder auch an den Diffusor 1 oder das Gehäuse 2 angespritzt werden. Das Dichtungsmittel 4 ist dabei den Abmessungen des Flanschbereichs 3 bzw. dem Flanschbereich des Diffusors 1, welcher dem Gehäuse 2 zuge-wandt ist, nachgebildet. Das Dichtungsmittel 4 weist mit den Schraubverbindungen 6 korrespondierende Öffnungen auf. Es können am Diffusor 1 oder am Gehäuse 2 Haltemittel vorgesehen sein, welche die Positionierung des Dichtungsmittels 4 vereinfachen. Dies können zum Beispiel Nasen oder Vorsprünge sein, welche das Einlegen oder Auflegen des Dichtungsmittels 4 vereinfachen.

Oberhalb des Dichtungsmittels 4 ist eine Druckplatte 5 angeordnet. Diese Druckplatte 5 kann vorteilhafterweise aus einem Kunststoff oder einem metallischen Werkstoff gebildet sein. Die Druckplatte 5 ist ebenfalls dem Flanschbereich 3 bzw. dem nicht gezeigten Flanschbereich des Diffusors 1 nachgebildet. Die Druckplatte 5 weist ebenfalls mit den Schraubverbindungen 6 korrespondierende Öffnungen auf. Die Aufgabe der Druckplatte 5 ist es, die durch die Schraubverbindungen 6 entstehenden punktuellen Belastungen über einen möglichst großen Bereich gleichmäßig auf den Diffusor 1 zu übertragen. Dies soll dem Abbau von punktuellen Lasten zugunsten von Flächenlasten dienen.

In einer besonders bevorzugten Ausführungsform kann es vorgesehen sein, dass die Druckplatte 5 sowie das Dichtungsmittel 4 in einer vormontierten Modulbaugruppe mit dem aus Kunststoff gefertigten Diffusor 1 zusammengefasst sind. Dies erleichtert insbesondere den Montageprozess des Abgaswärmeübertragers.

Der Diffusor 1 weist an seiner Außenfläche eine Mehrzahl von Rippenelementen 7 auf. Diese Rippenelemente 7 verlaufen derart an der Außenfläche des Diffusors 1, dass die Belastungen, welche aufgrund des Abgasdrucks oder ähnlichen Größen im Inneren des Abgaswärmeübertragers entstehen, ohne große Deformationen des Diffusors 1 abgebaut werden können.

In Fig. 1 ist eine Ausführung der Rippenelemente 7 gezeigt, wobei die Rippenelemente 7 ausgehend vom Flanschbereich zu einem zentralen Mittelpunkt am Diffusor 1 verlaufen. Die radial ausgerichteten Rippenelemente 7 sind dabei von im Wesentlichen kreisförmig ausgebildeten umlaufenden Rippenelementen 7 abgestützt.

Der Diffusor 1 bildet dabei eine kuppelartige Form aus, welche auf das Gehäuse 2 aufgesetzt ist.

Die Ausbildung der Rippenelemente 7 kann insbesondere an die am Diffusor 1 auftretenden spezifischen Belastungen ausgerichtet werden. Daher ist auch eine Ausrichtung der Rippenelemente 7, welche von der in Fig. 1 gezeigten Ausführung abweicht, vorsehbar.

Im linken Bereich der Fig. 1 ist ein Fluidanschluss 8 gezeigt. Dieser bildet den Fluidausgang des Diffusors 1. Der genauere Aufbau des Fluidanschlusses 8 ist in der nachfolgenden Fig. 2 erläutert.

Die Fig. 2 zeigt ein Schnittbild durch den Diffusor 1 der Fig. 1. In Fig. 2 ist insgesamt ein Ausschnitt eines Abgaswärmeübertragers 15 dargestellt, weicher ein Gehäuse 2 und den aus Kunststoff gefertigten Diffusor 1 aufweist.

Innerhalb des Gehäuses 2 ist ein Strömungskanal 11 ausgebildet, welcher vorteilhafterweise mit einem Kühlmittel durchströmt wird. Am Übergang zwischen dem Strömungskanal 11 und dem Diffusor 1 ist ein Rohrboden 10 angeordnet. In diesen Rohrboden 10 können Rohre eingesetzt werden, welche in der Fig. 1 aus Gründen der Übersichtlichkeit jedoch nicht gezeigt sind. Der Rohrboden 10 erzeugt dabei eine fluiddichte Abtrennung zwischen dem Strömungskanal 11 und dem Inneren des Diffusors 1. Zwischen dem Inneren des Diffusors 1 und dem Strömungskanal 11 besteht daher keine Fluidkommunikation. Das Innere des Diffusors 1 steht lediglich mit dem Innenbereich der nicht gezeigten Rohre in Fluidkommunikation. Die Rohre bilden dabei den ersten Strömungskanal, welcher vorteilhafterweise von einem Abgas durchströmt wird. Der Strömungskanal 11, welcher den zweiten Strömungskanal bildet, wird dabei vorteilhafterweise von einem Kühlmittel durchströmt.

Hierzu weist das Gehäuse 2 einen Fluidanschluss 13 auf, über welchen ein Kühlmittel in das Gehäuse 2 eingeleitet werden kann. Das Kühlmittel strömt dabei zuerst in einen Bereich 18 hinein, welcher dem Strömungskanal 11 vorgelagert ist. Dieser vorgelagerte Bereich 18 ist über eine in das Gehäuse 2 hineinstehende Trennwand über einen weiten Bereich des Gehäuses 2 vom Strömungskanal 11 getrennt. Im oberen, dem Diffusor 1 zugewandten Bereich ist eine Übertrittsstelle zwischen dem vorgelagerten Bereich 18 und dem Strömungskanal 11 angeordnet. Über diesen kann ein Kühlmittel, welches über den Fluidanschluss 13 ein- oder ausströmt, zwischen dem vorgelagerten Bereich 18 und dem Strömungskanal 11 strömen.

Der Fluidanschluss 13 weist eine Stützhülse 14 im Inneren auf, welche als ringförmiges Element ausgebildet ist. Die Stützhülse 14 dient dabei im Wesentlichen der Erhöhung der Stabilität des Fluidanschlusses 13, welcher vorteilhafterweise aus einem Kunststoff gefertigt ist.

In der Fig. 2 ist weiterhin zu erkennen, dass der Diffusor 1 eine erste Öffnung 16 aufweist, welche an dem Ende des Diffusors 1 angeordnet ist, das dem Strömungskanal 11 zugewandt ist. Weiterhin weist der Diffusor 1 eine zweite Öffnung 17 auf, welche am Endbereich des Fluidanschlusses 8 des Diffusors 1 angeordnet ist.

In einer vorteilhaften Ausführung durchströmt ein Abgas die nicht gezeigten Rohre und wird im Bereich des Gehäuses 2 durch das Kühlmittel, welches durch den Strömungskanal 11 strömt, abgekühlt. Das Abgas in seiner abgekühlten Form strömt dann über den Diffusor 1 aus dem Abgaswärmeübertrager 15 aus. Im Inneren des Diffusors 1 ist dafür ein Strömungsweg ausgebildet, welcher zwischen der ersten Öffnung 16 und der zweiten Öffnung 17 verläuft.

Der kreisrunde Fluidanschluss 8 des Diffusors 1 weist in seinem Endbereich eine ringförmig ausgeführte Stützhülse 9 auf. Diese dient der Erhöhung der Stabilität des Fluidanschlusses 8. An den Fluidanschluss 8 kann beispielsweise eine Rohrleitung angebunden werden, welche insbesondere über ein Klemmmittel, wie etwa eine Schlauchschelle, an dem Fluidanschluss 8 befestigt werden kann. Da der Fluidanschluss 8 vollständig aus Kunststoff gefertigt ist, kann über eine Stützhülse 9, welche vorteilhafterweise aus einem metallischen Werkstoff gefertigt ist, insgesamt die Stabilität des Fluidanschlusses 8 wesentlich erhöht werden.

In Fig. 2 sind weiterhin die Schraubverbindungen 6 angedeutet, welche den Diffusor 1 in einem Verbindungsbereich 12 mit dem umlaufenden Flanschbereich des Gehäuses 2 verbinden.

In Fig. 2 ist ebenfalls die kuppelartige Form des Diffusors 1 zu erkennen. Es ist gezeigt, dass ein Fluid, welches über die nicht gezeigten Rohre durch die erste Öffnung 16 in den Diffusor 1 einströmt um etwa 90° umgelenkt wird, bevor es durch den Fluidanschluss 8 über die zweite Öffnung 17 aus dem Diffusor 1 ausströmt. Auf diese Weise kann eine besonders kompakte Bauform des Abgaswärmeübertragers 15 erreicht werden.

Die in Fig. 1 und 2 gezeigten Ausführungsbeispiele sind beispielhaft und weisen keinen beschränkenden Charakter auf. Insbesondere die Formgebung des Diffusors 1 bzw. die Anordnung der Schraubverbindungen 6 oder die Gestaltung des Verbindungsbereichs 12 können in alternativen Ausführungsformen von den gezeigten Fig. 1 und 2 abweichen.

## Patentansprüche

1. Abgaswärmeübertrager (15) mit einem Gehäuse (2) und mit einem ersten Strömungskanal, wobei der erste Strömungskanal derart in dem Gehäuse (2) aufgenommen ist, dass zwischen dem ersten Strömungskanal und dem Gehäuse (2) ein zweiter Strömungskanal (11) gebildet ist, wobei der erste Strömungskanal von einem ersten Fluid durchströmbar ist und der zweite Strömungskanal (11) von einem zweiten Fluid durchströmbar ist, wobei der erste Strömungskanal von dem zweiten Fluid umströmbar ist, wobei das Gehäuse (2) endseitig einen ersten Diffusor (1) und einen zweiten Diffusor (1) aufweist, **dadurch gekennzeichnet, dass** der erste Diffusor aus einem metallischen Werkstoff gebildet ist und der zweite Diffusor (1) aus einem Kunststoff gebildet ist, wobei durch den ersten Diffusor das erste Fluid in den ersten Strömungskanal zuführbar und durch den zweiten Diffusor (1) aus dem ersten Strömungskanal abführbar ist, wobei der aus Kunststoff gefertigte zweite Diffusor (1) an zumindest einer seiner Außenflächen eine Mehrzahl von Rippenelementen (7) aufweist, welche die Festigkeit des Diffusors (1) erhöhen.

2. Abgaswärmeübertrager (15) nach Anspruch 1, **dadurch gekennzeichnet, dass** der aus Kunststoff gebildete Diffusor (1) zumindest teilweise aus einem oder mehreren der Materialien Polyamid (PA6) und/oder Polyamid (PA66) und/oder Polyphthalamid (PPA) und/oder Polyphenylensulfid (PPS) gebildet ist.

3. Abgaswärmeübertrager (15) nach einem der vorhergehenden Ansprüche, **dadurch gekennzeichnet, dass** der aus Kunststoff gefertigte Diffusor (1) eine erste Öffnung (16) und eine zweite Öffnung (17) aufweist, wobei die erste Öffnung (16) des Diffusors (1) dem Gehäuse (2) zugewandt ist und die zweite Öffnung (17) des Diffusors (1) von dem Gehäuse (2) abgewandt ist.

4. Abgaswärmeübertrager (15) nach Anspruch 3, **dadurch gekennzeichnet, dass** um die erste Öffnung (16) ein umlaufender ebener Flanschbereich ausgebildet ist, über welchen der Diffusor (1) an das Gehäuse (2) anbindbar ist.

5. Abgaswärmeübertrager (15) nach einem der vorhergehenden Ansprüche 3 oder 4, **dadurch gekennzeichnet, dass** der aus Kunststoff gefertigte Diffusor (1) eine Umlenkung der Hauptströmungsrichtung des ihn durchströmenden Fluids zwischen der ersten Öffnung (16) und der zweiten Öffnung (17) um einen vorgebbaren Winkel aufweist, wobei die Umlenkung vorzugsweise um einen Winkel von 90° erfolgt.

6. Abgaswärmeübertrager (15) nach einem der vorhergehenden Ansprüche, **dadurch gekennzeichnet, dass** der aus Kunststoff gefertigte Diffusor (1) als Modulbaugruppe ausgeführt ist, wobei die Modulbaugruppe zumindest eine Stützhülse (9) und/oder ein Verstärkungsmittel und/oder eine Druckplatte (5) und/oder ein Dichtungsmittel (4) aufweist.

7. Abgaswärmeübertrager (15) nach einem der vorhergehenden Ansprüche, **dadurch gekennzeichnet, dass** der aus Kunststoff gefertigte Diffusor (1) in einem Spritzgussverfahren herstellbar ist.

8. Abgaswärmeübertrager (15) nach einem der vorhergehenden Ansprüche, **dadurch gekennzeichnet, dass** der aus Kunststoff gefertigte Diffusor (1) über eine Mehrzahl von Schraubverbindungen (6) an das Gehäuse (2) anbindbar ist.

## Claims

1. An exhaust gas heat exchanger (15) with a housing (2) and with a first flow channel, wherein the first flow channel is received in the housing (2) such that a second flow channel (11) is formed between the first flow channel and the housing (2), wherein a first fluid may flow through the first flow channel and a second fluid may flow through the second flow channel (11), wherein the second fluid may flow around the first flow channel, wherein the housing (2) has a first diffuser (1) and a second diffuser (1) on an end thereof, **characterised in that** the first diffusor is formed from a metallic material and the second diffusor (1) is formed from a plastic, wherein the first fluid is supplied to the first flow channel via the first diffuser and discharged from the first flow channel via the second diffuser (1), wherein the second diffuser (1) manufactured from plastic has a plurality of rib elements (7) on at least one of its outer surfaces, which increase the strength of the diffuser (1).

2. The exhaust gas heat exchanger (15) according to claim 1, **characterised in that** the diffuser (1) formed from plastic is at least partially formed from one or more of the materials of polyamide (PA6) and/or polyamide (PA66) and/or polyphthalamide (PPA) and/or polyphenylene sulfide (PPS).

3. The exhaust gas heat exchanger (15) according to one of the preceding claims, **characterised in that** the diffuser (1) manufactured from plastic has a first opening (16) and a second opening (17), wherein the first opening (16) of the diffuser (1) faces the housing (2) and the second opening (17) of the diffuser (1) faces away from the housing (2).

4. The exhaust gas heat exchanger (15) according to claim 3, **characterised in that** a circumferential, planar flange area is formed around the first opening (16) via which the diffuser (1) is connectable to the housing (2).

5. The exhaust gas heat exchanger (15) according to one of the preceding claims 3 or 4, **characterised in that** the diffuser (1) manufactured from plastic has a deflection of the main flow direction of the fluid flowing through it between the first opening (16) and the second opening (17) by a predefinable angle, wherein the deflection preferably takes place by an angle of 90°.

6. The exhaust gas heat exchanger (15) according to one of the preceding claims, **characterised in that** the diffuser (1) manufactured from plastic is designed as a module assembly, wherein the module assembly has at least one supporting sleeve (9) and/or a reinforcing element and/or a pressure plate (5) and/or a sealing element (4).

7. The exhaust gas heat exchanger (15) according to one of the preceding claims, **characterised in that** the diffuser (1) manufactured from plastic can be produced in an injection moulding process.

8. The exhaust gas heat exchanger (15) according to one of the preceding claims, **characterised in that** the diffuser (1) manufactured from plastic is connectable to the housing (2) via a plurality of screw connections (6).

## Revendications

1. Echangeur de chaleur de gaz d'échappement (15) comprenant un carter (2) et un premier conduit d'écoulement, où le premier conduit d'écoulement est logé dans le carter (2) de manière telle, qu'un second conduit d'écoulement (11) soit formé entre le premier conduit d'écoulement et le carter (2), où le premier conduit d'écoulement peut être traversé par un premier fluide, et le second conduit d'écoulement (11) peut être traversé par un second fluide, où le premier conduit d'écoulement peut être baigné par le second fluide, où le carter (2) présente, côté extrémité, un premier diffuseur (1) et un second diffuseur (1), **caractérisé en ce que** le premier diffuseur est formé en se composant d'un matériau métallique et le second diffuseur (1) est formé en se composant d'une matière plastique, où le premier fluide peut être introduit dans le premier conduit d'écoulement en passant par le premier diffuseur et peut être évacué du premier conduit d'écoulement en passant par le second diffuseur (1), où le second diffuseur (1) fabriqué en matière plastique présente, sur au moins l'une de ses surfaces extérieures, une pluralité d'éléments à ailettes (7), lesquels éléments à ailettes augmentent la résistance du diffuseur (1).

2. Echangeur de chaleur de gaz d'échappement (15) selon la revendication 1, **caractérisé en ce que** le diffuseur (1) fabriqué en matière plastique est formé en se composant au moins en partie d'un ou de plusieurs des matériaux tels que du polyamide (PA6) et / ou du polyamide (PA66) et / ou du polyphtalamide (PPA) et / ou du sulfure de polyphénylène (PPS).

3. Echangeur de chaleur de gaz d'échappement (15) selon l'une des revendications précédentes, **caractérisé en ce que** le diffuseur (1) fabriqué en matière plastique présente une première ouverture (16) et une seconde ouverture (17), où la première ouverture (16) du diffuseur (1) est tournée vers le carter (2), et la seconde ouverture (17) du diffuseur (1) est placée à l'opposé du carter (2).

4. Echangeur de chaleur de gaz d'échappement (15) selon la revendication 3, **caractérisé en ce qu'une** zone de bride plane et circulaire est formée autour de la première ouverture (16), zone de bride par laquelle le diffuseur (1) peut être fixé sur le carter (2).

5. Echangeur de chaleur de gaz d'échappement (15) selon l'une des revendications précédentes 3 ou 4, **caractérisé en ce que** le diffuseur (1) fabriqué en matière plastique présente, entre la première ouverture (16) et la seconde ouverture (17), une redirection de flux de la direction principale d'écoulement du fluide traversant ledit diffuseur, redirection de flux qui peut varier suivant un angle prédéfinissable et qui se produit de préférence suivant un angle de 90°.

6. Echangeur de chaleur de gaz d'échappement (15) selon l'une quelconque des revendications précédentes, **caractérisé en ce que** le diffuseur (1) fabriqué en matière plastique est conçu comme un ensemble modulaire, où l'ensemble modulaire présente au moins un manchon de support (9) et / ou un moyen de renfort et / ou une plaque de pression (5) et / ou un moyen d'étanchéité (4).

7. Echangeur de chaleur de gaz d'échappement (15) selon l'une quelconque des revendications précédentes, **caractérisé en ce que** le diffuseur (1) fabriqué en matière plastique peut être réalisé en utilisant un procédé de moulage par injection.

8. Echangeur de chaleur de gaz d'échappement (15) selon l'une quelconque des revendications précédentes, **caractérisé en ce que** le diffuseur (1) fabriqué en matière plastique peut être fixé sur le carter (2) par une pluralité d'assemblages vissés (6).
